# EUROPÄISCHE PATENTSCHRIFT

(11) **EP 0 763 227 B1**
(45) Veröffentlichungstag und Bekanntmachung des Hinweises auf die Patenterteilung: **24.10.2001**
(21) Anmeldenummer: 96909123.0
(22) Anmeldetag: 25.03.1996
(51) Int. Cl.: G06K 11/18, G01D 5/20

(54) **STEUERSIGNALGEBER ZUR ERZEUGUNG MEHRERER STEUERSIGNALE MITTELS EINES EINZIGEN STEUERHEBELS**
CONTROL SIGNAL TRANSDUCER FOR GENERATING A PLURALITY OF CONTROL SIGNALS BY MEANS OF A SINGLE CONTROL LEVER
TRANSDUCTEUR DE SIGNAUX DE COMMANDE POUR PRODUIRE PLUSIEURS SIGNAUX DE COMMANDE A L'AIDE D'UN SEUL LEVIER DE COMMANDE

(30) Priorität: 29.03.1995 DE 19511436
(43) Veröffentlichungstag der Anmeldung: 19.03.1997
(73) Patentinhaber: Fernsteuergeräte Kurt Oelsch GmbH, 12347 Berlin (DE)
(72) Erfinder: SCHULZ, Klaus-Dieter, D-12349 Berlin (DE)
(74) Vertreter: Weisse, Jürgen, Dipl.-Phys.
(86) Internationale Anmeldenummer: EP9601303
(87) Internationale Veröffentlichungsnummer: WO9630861

(56) Entgegenhaltungen:
- EP-A- 0 399 484
- US-A- 4 712 648

## Beschreibung

### Technisches Gebiet

Die Erfindung betrifft einen Steuersignalgeber zur Erzeugung mehrerer Steuersignale mittels eines einzigen Steuerhebels, enthaltend:
(a) einen durch eine Schwenklagerung schwenkbar gelagerten Steuerhebel,
(b) ein an dem Steuerhebel starr angebrachtes Betätigungsglied,
(c) wenigstens ein Paar von Fühlern, die in bezug auf die Schwenklagerung diametral einander gegenüberliegen und jeweils einen in einem Gehäuse gegen die Wirkung einer Feder verschiebbaren Stößel aufweisen, dessen aus dem Gehäuse herausragendes Ende durch das Betätigungsglied gegen die Wirkung der Feder niederdrückbar ist,
(d) wenigstens ein Paar von ersten Induktionsspulen, durch welche sich jeweils einer der Stößel erstreckt, wobei an jedem Stößel ein erster Bereich von magnetisierbarem Material vorgesehen ist, der sich beim Niederdrücken des Stößels relativ zu der zugehörigen Induktionsspule verlagert und die Induktivität der Induktionsspule verändert, und
(e) eine Schaltungsanordnung, welche auf Änderung einer Induktionsspule des Paares von ersten Induktionsspulen relativ zu der anderen anspricht und erste Ausgangssignale nach Maßgabe dieser Änderungen liefert.

### Stand der Technik

Die EP 0 175 071 A1 beschreibt einen Steuersignalgeber, bei welchem zur Erzeugung eines Paares von Steuersignalen ein Steuerhebel in zwei Richtungen auslenkbar ist. An dem Steuerhebel ist um das Schwenklager herum ein Teller angebracht. In einem Grundteil sitzen Näherungssensoren, welche auf die Bewegung des Tellers um den Schwenkpunkt des Steuerhebels ansprechen. Die Näherungssensoren sind von Induktionsspulen gebildet, deren Induktivität durch die Annäherung des Tellers verändert wird. Diametral einander gegenüberliegende Induktionsspulen liegen in Reihe an einer Wechselspannung. An jeder der Induktionsspulen liegt ein Kondensator in Reihe mit einer Diode, wobei die Kondensatoren von den an den Induktionsspulen abfallenden Spannungen gegensinnig aufgeladen werden. Die Spannungen an den Kondensatoren sind zur Bildung des Steuersignals gegeneinandergeschaltet.

Die EP 0399 484 A1 beschreibt einen Steuersignalgeber zur Erzeugung eines Paares von Steuersignalen mit einem durch eine Schwenklagerung um einen Schwenkpunkt allseitig schwenkbar gelagerten Steuerhebel. An dem Steuerhebel ist ein glockenförmiges Betätigungsglied angebracht. Um den Steuerhebel herum sind zwei Paare von diametral einander gegenüberliegenden, induktiven Fühlern angeordnet, wobei die Paare ihrerseits um 90° gegeneinander winkelversetzt sind. Jeder der Fühler enthält einen in einem Gehäuse gegen die Wirkung einer Feder verschiebbaren Stößel. Das aus dem Gehäuse herausragende Ende des Fühlers wird bei einer Auslenkung des Steuerhebels aus einer Nullstellung in Richtung auf den Fühler durch das Betätigungsglied niedergedrückt. In dem Gehäuse ist eine Induktionsspule angeordnet, durch welche sich der Stößel erstreckt. Der Stößel enthält magnetisierbares Material, das sich bei einer Bewegung des Stößels relativ zu der Induktionsspule verlagert. Dadurch wird die Induktivität der Induktionsspule verändert. Um sicherzustellen, daß in der Nullstellung des Steuerhebels das Steuersignal mit Sicherheit null ist, ist an dem Stößel ein Nocken vorgesehen, der mit einem Schalter zusammenwirkt, derart, daß das Steuersignal des Steuersignalgebers bei der Nullstellung des Steuerhebels über die Kontakte des Schalters abgeschaltet ist.

Die Schalter und deren mechanische Betätigungsmittel sind Verschleiß unterworfen. Dadurch wird die Lebensdauer und die Betriebssicherheit des Steuersignalgebers beeinträchtigt.

### Offenbarung der Erfindung

Der Erfindung liegt die Aufgabe zugrunde, bei einem Steuersignalgeber der eingangs genannten Art mit einem berührungslos arbeitenden, rein induktiven Fühler eine einwandfreie Funktion des Fühlers zu gewährleisten.

Erfindungsgemäß wird diese Aufgabe dadurch gelöst, daß
(f) jeder der Fühler eines Paares eine zweite in dem Gehäuse angeordnete Induktionsspule aufweist,
(g) jeder Stößel sich durch die ersten und die zweiten Induktionsspulen des zugehörigen Fühlers erstreckt,
(h) an jedem der Stößel im Abstand von dem ersten Bereich von magnetisierbarem Material ein zweiter Bereich von magnetisierbarem Material vorgesehen ist, der sich beim Niederdrücken des Stößels relativ zu der zweiten Induktionsspule verlagert und die Induktivität der zweiten Induktionsspule wegabhängig in definierter Weise verändert,
(i) eine Schaltungsanordnung vorgesehen ist, welche auf Änderung einer Induktionsspule des Paares von zweiten Induktionsspulen relativ zu der anderen anspricht und zweite Steuersignale nach Maßgabe dieser Änderungen liefert, und
(j) eine Vergleichsschaltung vorgesehen ist, welche die ersten und zweiten Ausgangssignale zur Kontrolle der einwandfreien Funktion der Fühler vergleicht.

Es werden somit zwei Steuersignale aus zwei Induktionsspulen erzeugt. Beide Steuersignale sind in eindeutiger Weise von dem Hub des Stößels abhängig. Durch einen Vergleich der so erhaltenen Steuersignale können durch die Vergleichsschaltung Fehler des Systems erkannt werden. Mechanisch betätigte Schalter sind dabei nicht vorhanden. Die Fühler arbeiten vollständig berührungslos.

Zweckmäßigerweise werden die Induktivitäten in den zweiten Induktionsspulen dabei in dem gleichen Maße in Abhängigkeit vom Hub verändert wie die Induktivitäten in den ersten Induktionsspulen. Die Abhängigkeiten der Induktivitäten vom Hub können aber auch unterschiedlich sein, sofern sie eindeutig und reproduzierbar sind. Eine Auswerteschaltung kann dann auch unterschiedliche Steuersignale von den beiden Induktionsspulen vergleichen und daraus eventuelle Fehler des Systems erkennen.

Ausgestaltungen der Erfindung sind Gegenstand der Unteransprüche,

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt einen Längsschnitt durch einen Steuersignalgeber mit zwei in bezug auf einen Steuerhebel diametral einander gegenüberliegenden Fühlern, wobei zwei weitere Fühler in gleicher Weise in einer zur Papierebene von Fig.1 senkrechten Ebene angeordnet sind.
- Fig.2: zeigt schematisch die zugehörige Schaltung.

### Bevorzugte Ausführung der Erfindung

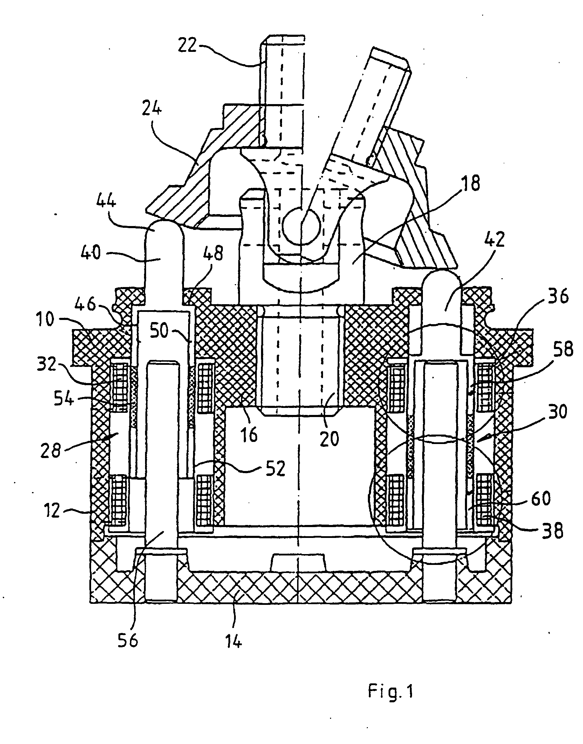

In Fig.1 ist mit 10 ein Gehäuse bezeichnet. Das Gehäuse 10 besteht aus einem umgekehrt-topfförmigen Oberteil 12 und einem Bodenteil 14. In den "Boden" 16 des umgekehrt-topfförmigen Oberteils 12 ist ein Schwenklager 18 in Form eines Kardanlagers mit einem Gewindeschaft 20 eingeschraubt. Das Kardanlager 18 lagert einen (nicht dargestellten) Steuerhebel, der auf einen Zapfen 22 aufschraubbar ist. An dem Zapfen sitzt ein glockenförmiges Betätigungsglied 24.

In dem Gehäuse 10 sitzen zwei Fühler 28 und 30. Der Fühler 28 enthält zwei gleichachsig angeordnete, im wesentlichen übereinstimmende Induktionsspulen 32 und 34. Der Fühler 30 enthält zwei gleichachsig angeordnete, im wesentlichen übereinstimmende Induktionsspulen 36 und 38. Die Fühler 28 und 30 weisen ferner je einen Stößel 40 bzw. 42 auf. Die Stößel 40 und 42 sind in dem Gehäuse in Axialrichtung verschiebbar geführt und erstrecken sich zentral durch die Induktionsspulen 32 und 34 bzw. 36 und 38. Jeder der Stößel enthält einen Kopfteil 44, der aus dem Gehäuse herausragt. An den Kopfteil 44 schließt sich eine Hülse 46 an, die mit dem Kopfteil 44 eine Ringschulter 48 bildet. Die Ringschulter 48 liegt in einer Endstellung (links in Fig.1) an einer Innenfläche des Gehäuses 10 an, die um den Durchbruch für den Kopfteil 44 herum gebildet ist. Eine (nicht dargestellte) Feder sucht die Hülse nach oben in Fig.1 zu drücken, bis die Ringschulter 48 an dieser Innenfläche zur Anlage kommt.

Die Hülse 46 besteht aus zwei Abschnitten 50 und 52 aus einem magnetisierbaren Material, die durch einen Abschnitt 54 aus unmagnetischem Material miteinander verbunden sind. Der Abstand der Abschnitte 50 und 52 entspricht etwa dem axialen Abstand der Induktionsspulen 32 und 34. Zentral in die Hülse erstreckt sich ein Bolzen 56, der in dem Bodenteil 14 gehaltert ist. Der Bolzen 56 bildet einen inneren Anschlag für den Stößel 40.

Wie aus dem linken Teil von Fig.1 ersichtlich ist, liegt in einer Nullstellung des Steuerhebels der Stößel 40 mit der Ringschulter 48 an der Innenfläche des Gehäuses 10 an. Die magnetisierbaren Abschnitte 50 und 52 der Hülse 46 sind beide außerhalb der Induktionsspulen 32 und 34. Es ergibt sich eine relativ geringe Induktivität der Induktionsspulen 32 und 34. Diese Induktivitäten sind aber im Normalfall innerhalb vorgegebener Toleranzen gleich.

Der Fühler 30 ist bei der Nullstellung des Steuerhebels in dem gleichen Zustand. Die Induktivitäten der jeweils diametral gegenüberliegenden Induktionsspulen sind dann gleich. Aus den ersten Spulen 32 und 36 und den zweiten Spulen 34 und 38 ergibt sich dann jeweils ein Steuersignal "null".

Wenn der Steuerhebel nach rechts in Fig.1 ausgelenkt wird, wie im rechten Teil von Fig.1 dargestellt ist, dann wird der Stößel 42 durch das glockenförmige Betätigungsglied 24 gegen die Wirkung der Feder niedergedrückt. Der Stößel 40 bleibt dabei in seiner dargestellten Lage. Das Betätigungsglied hebt von dem Stößel 40 einfach ab. Bei diesem Niederdrücken werden die magnetisierbaren Abschnitte 58 und 60 des Stößels 42 in die Induktionsspulen 36 bzw. 38 hineinbewegt. Die Induktivität beider Induktionsspulen wird dadurch in gleichem Maße vergrößert.

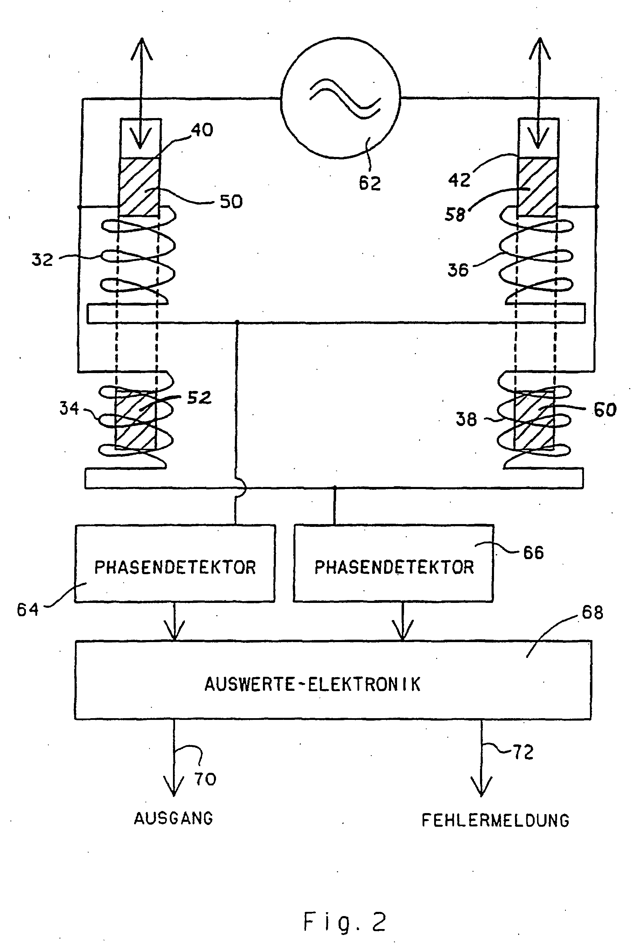

In Fig.2 ist schematisch die Schaltung des Steuersignalgebers dargestellt.

Die beiden ersten Induktionsspulen 32 und 36 der beiden Fühler 28 bzw. 30 sind in Reihe an eine Wechselstromquelle 62 angelegt. Parallel dazu sind die beiden zweiten Induktionsspulen 34 und 38 der beiden Fühler 28 bzw. 30 in Reihe an die Wechselstromquelle 62 angelegt. Die Induktionsspulen 32 und 36 sind mit einem ersten Phasendetektor 64 verbunden. Die beiden Induktionsspulen 34 und 38 sind mit einem zweiten Phasendetektor 66 verbunden. Die Phasendetektoren 64 und 66 liefern Ausgangssignale, die von den Unsymmetrien der Induktivitäten der Paare von Induktionsspulen 32 und 36 bzw. 34 und 38 abhängen. Bei der Ausbildung der Stößel von Fig.1 wären die Ausgangssignale der Phasendetektoren 64 und 66 bei intaktem System im wesentlichen gleich. Eine Auswerte-Elektronik 68 liefert ein Steuersignal nach Maßgabe der Auslenkung des Steuerhebels an einem Ausgang 70. Dieses Steuersignal kann beispielsweise das Ausgangssignal des Phasendetektors 64 sein. An einem Ausgang 72 erscheint eine Fehlermeldung, wenn die Ausgangssignale der beiden Phasendetektoren 64 und 66 um mehr als eine vorgegebene Toleranz voneinander abweichen.

In Fig.2 ist angedeutet, daß zur Fehlerkontrolle nicht notwendig die ersten und die zweiten Induktionsspulen gleiche Ausgangssignale an den Phasendetektoren 64. und 66 zu liefern brauchen. Wie in Fig.2 angedeutet ist, wird bei Niederdrücken des Stößels 40 ein magnetisierbarer Abschnitt 50 der Hülse in die Induktionsspule 32 hineinbewegt, während gleichzeitig der andere magnetisierbare Abschnitt 52 der Hülse aus der Induktionsspule herausbewegt wird. In der Nullstellung ergibt sich daher eine geringe Induktivität der Induktionsspule 32 und eine große Induktivität der Induktionsspule 34. Sofern die Zusammenhänge bekannt sind, kann auch hierauf eine Kontrolle der Funktion des Fühlers 28 begründet werden. Die zusammenhängenden Werte der Induktivitäten bzw. der Ausgangssignale der Phasendetektoren 64 und 66 können z.B. in einer Tabelle in einem Mikroprozessor der Auswerte-Elektronik 68 abgelegt sein.

Die Phasendetektoren können nach Art von Fig.6 der eingangs diskutierten EP 0 175 071 A1 ausgebildet sein.

## Patentansprüche

1. Steuersignalgeber zur Erzeugung mehrerer Steuersignale mittels eines einzigen Steuerhebels, enthaltend:
(a) einen durch eine Schwenklagerung schwenkbar gelagerten Steuerhebel,
(b) ein an dem Steuerhebel starr angebrachtes Betätigungsglied (24),
(c) wenigstens ein Paar von Fühlern (28,30), die in bezug auf die Schwenklagerung (18) diametral einander gegenüberliegen und jeweils einen in einem Gehäuse (10) gegen die Wirkung einer Feder verschiebbaren Stößel (40,42) aufweisen, dessen aus dem Gehäuse (10) herausragendes Ende (44) durch das Betätigungsglied (26) gegen die Wirkung der Feder niederdrückbar ist,
(d) wenigstens ein Paar von ersten Induktionsspulen (32,36), durch welche sich jeweils einer der Stößel (40,42) erstreckt, wobei an jedem Stößel (40,42) ein erster Bereich (50) von magnetisierbarem Material vorgesehen ist, der sich beim Niederdrücken des Stößels (40,42) relativ zu der zugehörigen Induktionsspule (32,36) verlagert und die Induktivität der Induktionsspule (32,36) verändert, und
(e) eine Schaltungsanordnung (64), welche auf Änderung einer Induktionsspule (34,36) des Paares von ersten Induktionsspulen relativ zu der anderen anspricht und erste Ausgangssignale nach Maßgabe dieser Änderungen liefert,
**dadurch gekennzeichnet, daß**
(f) jeder der Fühler (28,30) eines Paares eine zweite in dem Gehäuse (10) angeordnete Induktionsspule (34,38) aufweist,
(g) jeder Stößel (40,42) sich durch die ersten und die zweiten Induktionsspulen (32,36 bzw. 34,38) des zugehörigen Fühlers (28,30) erstreckt,
(h) an jedem der Stößel (40,42) im Abstand von dem ersten Bereich (50) von magnetisierbarem Material ein zweiter Bereich (52) von magnetisierbarem Material vorgesehen ist, der sich beim Niederdrücken des Stößels (40,42) relativ zu der zweiten Induktionsspule (34,38) verlagert und die Induktivität der zweiten Induktionsspule (34,38) wegabhängig in definierter Weise verändert,
(i) eine Schaltungsanordnung (66), welche auf Änderung einer Induktionsspule (34 oder 38) des Paares von zweiten Induktionsspulen (34,38) relativ zu der anderen (38 bzw. 34) anspricht und zweite Ausgangssignale nach Maßgabe dieser Änderungen liefert, und
(j) eine Vergleichsschaltung (68), welche die ersten und zweiten Ausgangssignale zur Kontrolle der einwandfreien Funktion der Fühler vergleicht.

2. Steuersignalgeber nach Anspruch 1, **dadurch gekennzeichnet, daß** in einer Nullstellung des Steuerhebels jeder Stößel (40,42) eines Paares von Fühlern (28,30) unter dem Einfluß der Feder an einem Anschlag anliegt.

3. Steuersignalgeber nach Anspruch 2, **dadurch gekennzeichnet, daß** die Ausgangssignale in der Nullstellung den Wert null haben.

4. Steuersignalgeber nach Anspruch 2 oder 3, **dadurch gekennzeichnet, daß**
(a) das Betätigungsglied (24) des Steuerhebels bei Auslenkung des Steuerhebels in eine Richtung den Stößel des einen Fühlers eines Paares niederdrückt und den Stößel des anderen Fühlers freigibt, so daß dieser in Anlage an seinem Anschlag bleibt, und bei Auslenkung des Steuerhebels in die entgegengesetzte Richtung den Stößel des anderen Fühlers des Paares niederdrückt und den Stößel des ersteren Fühlers freigibt, so daß jetzt dieser in Anlage an seinem Anschlag bleibt,
(b) die ersten Induktionsspulen (32,26) der Fühler (28,30) eines Paares in einer ersten Phasendetektor-Schaltung (64) zur Erzeugung des ersten Ausgangssignals zusammengeschaltet sind, und
(c) die zweiten Induktionsspulen (34,38) der Fühler (28,30) des Paares in einer zweiten Phasendetektor-Schaltung zur Erzeugung des zweiten Ausgangssignals zusammengeschaltet sind.

## Claims

1. Control signal transmitter for generating a plurality of control signals by means of one single control lever, comprising:
(a) a control lever pivotably mounted in a pivot bearing,
(b) an actuating member (24) rigidly connected to the control lever,
(c) at least one pair of sensors (28,30) which are arranged diametrically opposite each other with respect to the pivot bearing (18) and each comprises a push rod (40,42) displaceable in a housing against the action of a spring, the end (44) of the push rod projecting out of the housing (10) being arranged to be pressed down by the actuating member (26) against the action of the spring,
(d) at least one pair of first induction coils (32,36), one push rod (40,42) extending through each one of the induction coils (32,36) and a first region (50) of magnetizable material being provided on each push rod (40,42), which region (50) is displaced relatively to the associated induction coil (32,36) and alters the inductivity of the induction coil (32,36) when the push rod (40,42) is pressed down, and
(e) a circuit arrangement (64) which respond to alteration of one induction coil (34,36) of the pair of first induction coils relative to the other and supplies first output signals as a function of this alteration,
**characterized in that**
(f) each of the sensors (28,30) of one pair comprises a second induction coil (34,38) arranged in the housing (10),
(g) each push rod (40,42) extends through the first and the second induction coils (32,36 and 34,38, respectively) of the associated sensor (28,30),
(h) a second region (52) of magnetizable material being provided on each push rod (40,42) spaced from the first region (50), which second region (52) is displaced relatively to the second induction coil (34,38) and alters the inductivity of the second induction coil (34,38) in a defined manner as a function of displacement when the push rod (40,42) is pressed down,
(i) a circuit arrangement (66) which respond to alteration of one induction coil (34 or 38) of the pair of second induction coils (34,38) relative to the other (38 or 34, respectively) and supplies second output signals as a function of this alteration, and
(j) a comparator circuit (68) which compares the first and the second output signals for verification of the proper functioning of the sensor.

2. Control signal transmitter as set forth in claim 1, **characterized in that** each push rod (40,42) of one pair of sensors (28,30) engages a stop under the action of the spring when the control lever is in a zero position.

3. Control signal transmitter as set forth in claim 2, **characterized in that** the output signals are zero in the zero position.

4. Control signal transmitter as set forth in claim 2 or 3, **characterized in that**
(a) when the control lever is pivoted in one direction, the actuating member (24) of the control lever presses down the push rod of one of the sensors of one pair and releases the push rod of the other sensor such that this push rod remains in engagement with its stop, and when the control lever is pivoted in the opposite direction, the actuating member (24) of the control lever presses down the push rod of the other sensor of the pair and releases the push rod of the first sensor such that now this push rod remains in engagement with its stop,
(b) the first induction coils (32,36) of the sensors (28,30) of one pair are interconnected in a first phase detector circuit (64) for generating the first output signal, and
(c) the second induction coils (34,38) of the sensors (28,30) of the pair are interconnected in a second phase detector circuit for generating the second output signal.

## Revendications

1. Transmetteur de signaux de commande destiné à générer plusieurs signaux de commande au moyen d'un unique levier de commande, comprenant :
(a) un levier de commande logé de façon susceptible de pivoter grâce à un logement pivotant,
(b) un organe d'actionnement (24) placé fixement sur le levier de commande,
(c) au moins une paire de capteurs (28,30) qui se trouvent diamétralement l'un en face de l'autre par rapport au logement pivotant (18) et présentent à chaque fois un poussoir (40,42) susceptible de se déplacer dans un boîtier (10) contre l'action d'un ressort, poussoir dont l'extrémité (44) émergeant hors du boîtier (10) est susceptible d'être abaissée grâce à l'organe d'actionnement (24) contre l'action du ressort,
(d) au moins une paire de premières bobines d'induction (32,36) traversées à chaque fois par l'un des poussoirs (40,42), un premier domaine (50) de matériau susceptible d'être magnétisé étant prévu à chaque poussoir (40,42), domaine se déplaçant par rapport à la bobine d'induction associée (32,36) lorsque le poussoir s'abaisse et modifiant l'inductance de la bobine d'induction (32,36), et
(e) une disposition de circuit (64) répondant à la modification d'une bobine d'induction (34,36) de la paire de premières bobines d'induction par rapport à l'autre et livrant des premiers signaux de sortie en fonction de ces modifications,
**caractérisé par le fait que**
(f) chaque capteur (28,30) d'une paire présente une seconde bobine d'induction (34,38) disposée dans le boîtier (10),
(g) chaque poussoir (40,42) traverse les premières et les secondes bobines d'induction (32,36 et 34,38 respectivement) du capteur associé (28,30),
(h) un second domaine (52) de matériau susceptible d'être magnétisé est prévu pour chaque poussoir (40,42) en formant un écart par rapport au premier domaine (50) de matériau susceptible d'être magnétisé, domaine se déplaçant par rapport à la seconde bobine d'induction (34,38) lorsque le poussoir (40,42) s'abaisse et modifiant l'inductance de la seconde bobine d'induction (34,38) de façon définie en fonction de la trajectoire,
(i) il est prévu une disposition de circuit (66) qui répond à la modification d'une bobine d'induction (34 ou 38) de la paire des secondes bobines d'induction (34,38) par rapport à l'autre (38 et 34 respectivement) et livre des seconds signaux de commande en fonction de ces modifications, et
(j) il est prévu un circuit de comparaison (68) qui compare les premiers et les seconds signaux de sortie afin de contrôler le parfait fonctionnement des capteurs.

2. Transmetteur de signaux de commande selon la revendication 1, **caractérisé par le fait que,** en position zéro du levier de commande, chaque poussoir (40,42) d'une paire de capteurs (28,30) est adjacent à une butée en étant influencé par un ressort.

3. Transmetteur de signaux de commande selon la revendication 2, **caractérisé par le fait que,** en position zéro, la valeur des signaux de sortie est de zéro.

4. Transmetteur de signaux de commande selon la revendication 2 ou 3, **caractérisé par le fait que**
(a) lorsque le levier de commande s'oriente dans une direction, l'organe d'actionnement (24) du levier de commande abaisse le poussoir de l'un des capteurs d'une paire et libère le poussoir de l'autre capteur de telle façon que celui-ci reste en appui contre sa butée, et lorsque le levier de commande s'oriente dans la direction opposée, il abaisse le poussoir de l'autre capteur de la paire et libère le poussoir du premier capteur de telle façon que celui-ci reste maintenant en appui contre sa butée,
(b) les premières bobines d'induction (32,36) des capteurs (28,30) d'une paire sont montées ensemble dans un premier circuit de détecteurs de phases (64) afin de générer le premier signal de sortie, et
(c) les secondes bobines d'induction (34,38) des capteurs (28,30) de la paire sont montées ensemble dans un second circuit de détecteurs de phases afin de générer le second signal de sortie.
